# FASCICULE DE BREVET EUROPEEN

(11) **EP 3 535 158 B1**
(45) Date de publication et mention de la délivrance du brevet: **17.03.2021**
(21) Numéro de dépôt: 17804617.3
(22) Date de dépôt: 05.11.2017
(51) Int. Cl.: B60N 2/56

(54) **MATELASSURE D'ASSISE OU DE DOSSIER DE SIEGE DE VEHICULE AUTOMOBILE**
SEAT OR BACKREST UPHOLSTERY OF AN AUTOMOBILE SEAT
SITZ- ODER LEHNENPOLSTERUNG EINES KRAFTFAHRZEUGSITZES

(30) Priorité: 04.11.2016 FR 1660698
(43) Date de publication de la demande: 11.09.2019
(73) Titulaire: TESCA France, 75008 Paris (FR)
(72) Inventeur: SANCHEZ, Santiago, 75008 Paris (FR); PUIG, Lluis, 75008 Paris (FR); GEORGES, Laurent, 75008 Paris (FR)
(74) Mandataire: Sayettat, Julien Christian
(86) Numéro de dépôt international: PCT/FR2017/053020
(87) Numéro de publication internationale: WO 2018/083427

(56) Documents cités:
- EP-A1- 2 532 543
- EP-A1- 2 829 434
- US-A1- 2011 226 751
- US-A1- 2014 246 415
- US-A1- 2016 183 359

## Description

L'invention concerne une matelassure d'assise ou de dossier de siège de véhicule automobile et un siège comprenant une telle matelassure.

Il est connu, notamment du document US-2011/0226751, de réaliser une matelassure d'assise ou de dossier de siège de véhicule automobile, ladite matelassure comprenant :
- un bloc de rembourrage à base de matériau élastiquement compressible,
- une coiffe de revêtement dudit bloc,
- une nappe chauffante s'interposant entre ledit bloc et ladite coiffe, ladite nappe comprenant un circuit électrique à base d'encre conductrice, ladite encre étant à base d'un liant polymère dans lequel sont dispersées des particules conductrices, ladite encre étant imprimée sur un support,
ladite matelassure présentant les caractéristiques suivantes :
- ledit circuit comprend au moins un premier et au moins un deuxième bus s'étendant longitudinalement
- ledit premier bus est pourvu d'un premier point de connexion destiné à être connecté à un premier pôle d'un générateur électrique et ledit deuxième bus est pourvu d'un deuxième point de connexion destiné à être connecté à un deuxième pôle dudit générateur, lesdits points de connexion étant situés selon un bord de ladite matelassure,
- lesdits bus sont reliés entre eux par une pluralité de microcircuits imprimés conformés de manière à former des résistances aptes à chauffer ladite matelassure par passage d'un courant électrique.

Par ailleurs, le document EP-2 829 434 décrit un élément d'assise, notamment pour un siège de véhicule automobile, comportant une nappe de suspension déformable et au moins une piste électrique configurée pour présenter une résistance linéique variable en fonction de la déformation de la nappe de suspension, la piste électrique étant formée directement sur la nappe de suspension ou au sein de la nappe de suspension.

La réalisation d'un circuit électrique à base d'encre conductrice imprimée, en comparaison avec des réalisations mettant en jeu des câbles métalliques, présente l'intérêt de permettre une grande liberté dans la définition géométrique dudit circuit.

En particulier, on peut aisément prévoir des zones dépourvues de circuit afin de permettre le passage d'organes d'ancrage - par exemple en forme de crochets - de la coiffe solidairement au bloc de rembourrage - lesdits crochets venant s'ancrer par exemple sur un fil métallique surmoulé par ledit bloc en sa face d'envers.

Cependant, de par sa constitution, une telle encre est moins conductrice, à iso-section, qu'un câble métallique qui présente une résistance négligeable.

Par conséquent, la résistance opposée au courant passant dans un bus s'accroit de façon notoire à mesure que l'on s'éloigne de son point de connexion.

Il en résulte un passage dans les microcircuits d'une intensité de courant décroissante à mesure que lesdits microcircuits sont éloignés des points de connexion, ce qui se traduit par une diminution correspondante de la chauffe.

Par conséquent, la matelassure est d'autant moins chauffée que l'on s'éloigne des points de connexion.

L'invention a pour but de pallier cet inconvénient.

A cet effet, et selon un premier aspect, l'invention propose une matelassure d'assise ou de dossier de siège de véhicule automobile, ladite matelassure comprenant :
- un bloc de rembourrage à base de matériau élastiquement compressible,
- une coiffe de revêtement dudit bloc,
- une nappe chauffante s'interposant entre ledit bloc et ladite coiffe, ladite nappe comprenant un circuit électrique à base d'encre conductrice, ladite encre étant à base d'un liant polymère dans lequel sont dispersées des particules conductrices, ladite encre étant imprimée sur un support,
ladite matelassure présentant les caractéristiques suivantes :
- ledit circuit comprend au moins un premier et au moins un deuxième bus s'étendant longitudinalement
- ledit premier bus est pourvu d'un premier point de connexion destiné à être connecté à un premier pôle d'un générateur électrique et ledit deuxième bus est pourvu d'un deuxième point de connexion destiné à être connecté à un deuxième pôle dudit générateur, lesdits points de connexion étant situés selon un bord de ladite matelassure,
- lesdits bus sont reliés entre eux par une pluralité de microcircuits imprimés conformés de manière à former des résistances aptes à chauffer ladite matelassure par passage d'un courant électrique,
ladite matelassure présentant en outre au choix l'une ou l'autre des caractéristiques suivantes :
- lesdits bus sont à base d'une première encre et lesdits microcircuits sont à base d'une deuxième encre, ladite première encre présentant une conductivité intrinsèque supérieure à celle de ladite deuxième encre,
- ou bien lesdits bus et microcircuits sont à base d'une même encre, ladite encre étant déposée en épaisseur plus importante pour lesdits bus que pour lesdits microcircuits, de sorte que lesdits bus opposent une résistance électrique minimisée au passage du courant.

Dans cette description, les termes de positionnement dans l'espace (longitudinal, transversal, latéral, horizontal, inférieur,...) sont pris en référence à une matelassure d'assise disposée en position d'utilisation dans le véhicule et à une matelassure de dossier rabattue à l'horizontale, selon un axe de rotation s'étendant en bord inférieur dudit dossier lorsqu'il est en position d'utilisation.

Avec l'agencement proposé, on minimise la résistance électrique des bus, ce qui permet une alimentation sensiblement homogène des différents microcircuits, quel que soit leur éloignement des points de connexion.

Il en résulte une chauffe sensiblement uniforme de la matelassure sur sa face de réception d'un passager.

Selon un deuxième aspect, l'invention propose un siège comprenant une telle matelassure.

D'autres particularités et avantages de l'invention apparaîtront dans la description qui suit, faite en référence aux figures jointes, dans lesquelles :

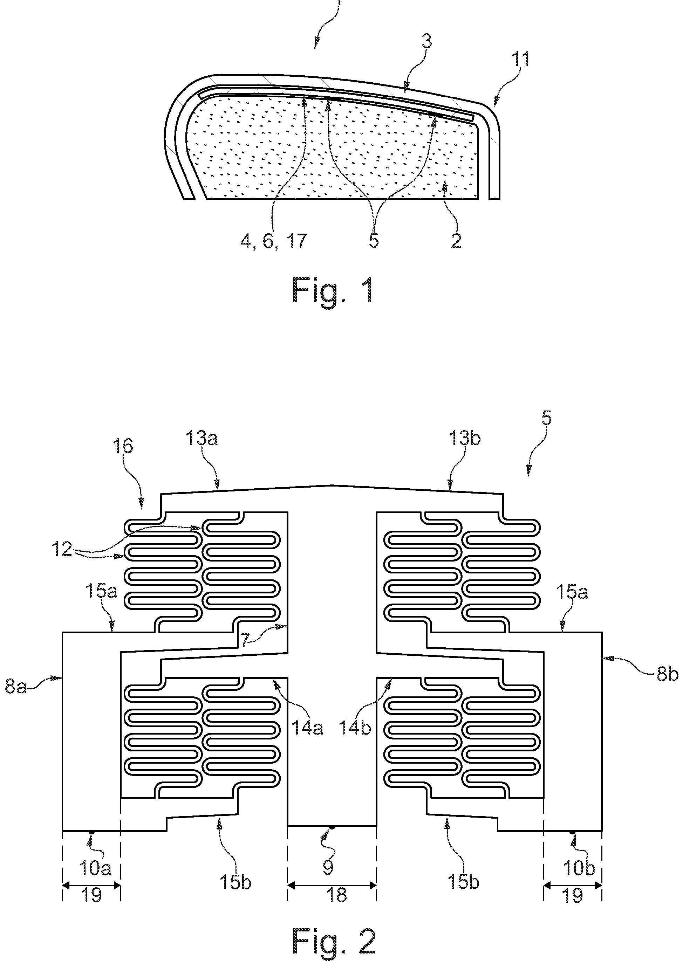

- la figure 1 est une représentation schématique en coupe d'une matelassure selon une réalisation,
- la figure 2 est une représentation schématique vue de face d'un circuit selon une réalisation.

En référence aux figures, on décrit une matelassure 1 d'assise ou de dossier de siège de véhicule automobile, ladite matelassure comprenant :
- un bloc 2 de rembourrage à base de matériau élastiquement compressible,
- une coiffe 3 de revêtement dudit bloc,
- une nappe 4 chauffante s'interposant entre ledit bloc et ladite coiffe, ladite nappe comprenant un circuit électrique 5 à base d'encre conductrice, ladite encre étant à base d'un liant polymère dans lequel sont dispersées des particules conductrices - par exemple métalliques -, ladite encre étant imprimée sur un support 6,
ladite matelassure présentant les caractéristiques suivantes :
- ledit circuit comprend au moins un premier 7 et au moins un deuxième 8a,8b bus s'étendant longitudinalement
- ledit premier bus est pourvu d'un premier point de connexion 9 destiné à être connecté à un premier pôle d'un générateur électrique et ledit deuxième bus est pourvu d'un deuxième point de connexion 10a,10b destiné à être connecté à un deuxième pôle dudit générateur, lesdits points de connexion étant situés selon un bord 11 de ladite matelassure,
- lesdits bus sont reliés entre eux par une pluralité de microcircuits 12 imprimés conformés - en tortillons selon la réalisation représentée - de manière à former des résistances aptes à chauffer ladite matelassure par passage d'un courant électrique,
ladite matelassure présentant en outre au choix l'une ou l'autre des caractéristiques suivantes :
- lesdits bus sont à base d'une première encre et lesdits microcircuits sont à base d'une deuxième encre, ladite première encre présentant une conductivité intrinsèque supérieure à celle de ladite deuxième encre,
- ou bien lesdits bus et microcircuits sont à base d'une même encre, ladite encre étant déposée en épaisseur plus importante pour lesdits bus que pour lesdits microcircuits, de sorte que lesdits bus opposent une résistance électrique minimisée au passage du courant.

L'obtention d'une meilleure conductivité pour la première encre que pour la deuxième peut être réalisée de diverses manières, par exemple en prenant des particules conductrices de meilleure conductivité, en augmentant leur taux, etc.

Selon la réalisation représentée, la matelassure 1 comprend :
- un premier bus 7 unique situé en partie centrale de ladite matelassure, de sorte que ledit bus forme bus central 7,
- deux deuxièmes bus 8a,8b disposés latéralement et symétriquement de part et d'autre dudit bus central, de sorte que lesdits deuxièmes bus forment bus latéraux 8a,8b, chacun desdits bus latéraux étant pourvu d'un deuxième point de connexion 10a, 10b,

En variante non représentée, on peut prévoir que le premier bus 7 comprenne une fente médiane de manière à se présenter sous forme de deux sous bus parallèles, ladite fente permettant le passage d'organes d'ancrage de la coiffe 3 solidairement au bloc 2.

En variante non représentée, on peut prévoir un premier 7 et un deuxième 8a bus disposés latéralement de part et d'autre de la matelassure 1, les microcircuits 12 s'étendant transversalement entre lesdits bus.

Une telle réalisation permet de préserver la partie centrale de matelassure 1 de la présence d'un bus 7 qui pourrait empêcher la mise en place de moyens de fixation de la coiffe 3 sur le bloc 2.

Selon la réalisation représentée, les bus 7,8a,8b se présentent généralement en vue de face sous forme de bandes de largeur constante, la largeur 18 du bus central 7 étant sensiblement le double de celle 19 des bus latéraux 8a,8b.

Ainsi, à iso-épaisseur d'encre pour les premier 7 et deuxièmes 8a,8b bus, on assure un passage fluide du courant d'une borne à l'autre du générateur, sans « goulot d'étranglement ».

Selon la réalisation représentée, la largeur 18 du bus central 7 est comprise entre 1,8 et 2,2 fois la largeur 19 des bus latéraux 8a,8b.

Selon la réalisation représentée, les microcircuits 12 sont placés sur des plages disposées symétriquement par rapport au bus central 7, de manière à permettre une chauffe symétrique de la matelassure 1.

Selon la réalisation représentée :
- le bus central 7 est pourvu d'au moins une première et une deuxième paire de branches 13a, 13b, 14a, 14b transversales s'étageant selon la longueur dudit bus, deux branches d'une paire donnée pointant respectivement vers l'un et l'autre des bus latéraux 8a,8b,
- lesdits bus latéraux sont chacun pourvus de branches réciproques 15a,15b transversales pointant vers ledit bus central, chacune desdites branches réciproques étant reliée à une branche respective 13a,13b,14a,14b dudit bus central par une pluralité de microcircuits 12, ladite pluralité formant un sous-circuit 16 de chauffe.

Selon la réalisation représentée, les branches 13a, 13b, 14a, 14b et branches réciproques 15a,15b présentent une largeur s'amenuisant à mesure qu'on se dirige vers leur extrémité libre.

Selon une réalisation, la largeur des microcircuits 12 d'un sous circuit 16 de chauffe augmente à mesure que ledit sous-circuit est éloigné des points de connexion 9, 10a, 10b.

Un tel agencement permet de compenser une légère décroissance de l'intensité du courant dans les microcircuits 12, à mesure qu'ils sont éloignés des points de connexion 9,10a,10b, qui résulte du fait que les bus 7,8a,8b ne sont pas parfaitement conducteurs.

Selon diverses réalisations, le support 6 recevant le circuit électrique 5 imprimé est formé au choix par :
- une couche flexible 17 interposée entre la coiffe 3 et le bloc 2, selon la réalisation représentée,
- ou la face dudit bloc destinée à recevoir un occupant du siège, selon une réalisation non représentée,
- ou la face d'envers de ladite coiffe, selon une réalisation non représentée.

Selon la réalisation représentée, le support 6 recevant le circuit électrique 5 imprimé étant formé par une couche flexible 17 interposée entre la coiffe 3 et le bloc 2, le circuit 5 est tourné vers ledit bloc afin qu'il soit protégé de façon optimale.

On décrit enfin, de façon non représentée, un siège de véhicule automobile comprenant une telle matelassure 1, ladite matelassure étant montée solidairement à une armature dudit siège, les points de connexion 9, 10a, 10b étant situés en bord 11 de ladite matelassure, ledit bord étant disposé dans la zone de jonction entre l'assise et le dossier.

Un tel agencement permet de garantir une grande robustesse des points connexion 9, 10a, 10b qui ne sont pas sollicités mécaniquement par un passager en appui sur la matelassure 1.

## Revendications

1. Matelassure (1) d'assise ou de dossier de siège de véhicule automobile, ladite matelassure comprenant :
• un bloc (2) de rembourrage à base de matériau élastiquement compressible,
• une coiffe (3) de revêtement dudit bloc,
• une nappe (4) chauffante s'interposant entre ledit bloc et ladite coiffe, ladite nappe comprenant un circuit électrique (5) à base d'encre conductrice, ladite encre étant à base d'un liant polymère dans lequel sont dispersées des particules conductrices, ladite encre étant imprimée sur un support (6),
ladite matelassure présentant les caractéristiques suivantes :
• ledit circuit comprend au moins un premier (7) et au moins un deuxième (8a,8b) bus s'étendant longitudinalement,
• ledit premier bus est pourvu d'un premier point de connexion (9) destiné à être connecté à un premier pôle d'un générateur électrique et ledit deuxième bus est pourvu d'un deuxième point de connexion (10a, 10b) destiné à être connecté à un deuxième pôle dudit générateur, lesdits points de connexion étant situés selon un bord (11) de ladite matelassure,
• lesdits bus sont reliés entre eux par une pluralité de microcircuits (12) imprimés conformés de manière à former des résistances aptes à chauffer ladite matelassure par passage d'un courant électrique,
ladite matelassure étant **caractérisée en ce qu'**elle présente au choix l'une ou l'autre des caractéristiques suivantes :
• lesdits bus sont à base d'une première encre et lesdits microcircuits sont à base d'une deuxième encre, ladite première encre présentant une conductivité intrinsèque supérieure à celle de ladite deuxième encre,
• ou bien lesdits bus et microcircuits sont à base d'une même encre, ladite encre étant déposée en épaisseur plus importante pour lesdits bus que pour lesdits microcircuits, de sorte que lesdits bus opposent une résistance électrique minimisée au passage du courant.

2. Matelassure selon la revendication 1, **caractérisée en ce qu'**elle comprend :
• un premier bus (7) unique situé en partie centrale de ladite matelassure, de sorte que ledit bus forme bus central (7),
• deux deuxièmes bus (8a,8b) disposés latéralement et symétriquement de part et d'autre dudit bus central, de sorte que lesdits deuxièmes bus forment bus latéraux (8a,8b), chacun desdits bus latéraux étant pourvu d'un deuxième point de connexion (10a, 10b),

3. Matelassure selon la revendication 2, **caractérisée en ce que** les bus (7,8a,8b) se présentent généralement en vue de face sous forme de bandes de largeur constante, la largeur (18) du bus central (7) étant sensiblement le double de celle (19) des bus latéraux (8a,8b).

4. Matelassure selon la revendication 3, **caractérisée en ce que** la largeur (18) du bus central (7) est comprise entre 1,8 et 2,2 fois la largeur (19) des bus latéraux (8a,8b).

5. Matelassure selon l'une quelconque des revendications 2 à 4, **caractérisée en ce que** les microcircuits (12) sont placés sur des plages disposées symétriquement par rapport au bus central (7).

6. Matelassure selon l'une quelconque des revendications 2 à 5, **caractérisée en ce que** :
• le bus central (7) est pourvu d'au moins une première et une deuxième paire de branches (13a,13b,14a,14b) transversales s'étageant selon la longueur dudit bus, deux branches d'une paire donnée pointant respectivement vers l'un et l'autre des bus latéraux (8a,8b),
• lesdits bus latéraux sont chacun pourvus de branches réciproques (15a, 15b) transversales pointant vers ledit bus central, chacune desdites branches réciproques étant reliée à une branche respective (13a, 13b, 14a, 14b) dudit bus central par une pluralité de microcircuits (12), ladite pluralité formant un sous-circuit (16) de chauffe.

7. Matelassure selon l'une la revendication 6, **caractérisée en ce que** les branches (13a,13b,14a,14b) et branches réciproques (15a,15b) présentent une largeur s'amenuisant à mesure qu'on se dirige vers leur extrémité libre.

8. Matelassure selon l'une quelconque des revendications 1 à 7, **caractérisée en ce que** la largeur des microcircuits (12) d'un sous circuit (16) de chauffe augmente à mesure que ledit sous-circuit est éloigné des points de connexion (9, 10a, 10b).

9. Matelassure selon l'une quelconque des revendications 1 à 8, **caractérisée en ce que** le support (6) recevant le circuit électrique (5) imprimé est formé au choix par :
• une couche flexible (17) interposée entre la coiffe (3) et le bloc (2),
• ou la face dudit bloc destinée à recevoir un occupant du siège,
• ou la face d'envers de ladite coiffe.

10. Siège de véhicule automobile comprenant une matelassure selon l'une quelconque des revendications 1 à 9, ladite matelassure étant montée solidairement à une armature dudit siège, les points de connexion (9, 10a, 10b) étant situés en bord (11) de ladite matelassure, ledit bord étant disposé dans la zone de jonction entre l'assise et le dossier.

## Patentansprüche

1. Polsterung (1) für eine Sitzfläche oder Rückenlehne eines Kraftfahrzeugsitzes, wobei die Polsterung umfasst:
• einen Füllungsblock (2) auf Basis eines elastisch komprimierbaren Materials,
• eine Deckschicht (3) eines Überzugs des Blocks,
• eine Heizeinlage (4), die zwischen dem Block und der Deckschicht eingeschoben ist, wobei die Einlage einen Stromkreis (5) auf Basis einer leitfähigen Tinte umfasst,
wobei die Tinte auf Basis eines Polymer-Bindemittels ist, in dem leitfähige Teilchen verteilt sind, wobei die Tinte auf eine Unterlage (6) gedruckt wird,
wobei die Polsterung die folgenden Eigenschaften aufweist:
• der Kreis umfasst mindestens einen ersten (7) und mindestens einen zweiten (8a, 8b) Bus, der sich in Längsrichtung erstreckt,
• der erste Bus ist mit einer ersten Verbindungsstelle (9) versehen, die dazu bestimmt ist, mit einem ersten Pol eines Stromgenerators verbunden zu werden, und der zweite Bus ist mit einer zweiten Verbindungsstelle (10a, 10b) versehen, die dazu bestimmt ist, mit einem zweiten Pol des Generators verbunden zu werden, wobei die Verbindungsstellen entlang eines Randes (11) der Polsterung gelegen sind,
• die Busse sind durch eine Vielzahl von gedruckten Mikrokreisen (12) aneinander angeschlossen, die derart ausgeführt sind, um Widerstände zu bilden, die imstande sind, die Polsterung durch Fließen eines elektrischen Stroms zu erwärmen,
wobei die Polsterung **dadurch gekennzeichnet ist, dass** sie wahlweise die folgenden Eigenschaften aufweist:
• die Busse basieren auf einer ersten Tinte und die Mikrokreise basieren auf einer zweiten Tinte, wobei die erste Tinte eine intrinsische Leitfähigkeit größer als jene der zweiten Tinte aufweist,
• oder aber die Busse und Mikrokreise basieren auf einer selben Tinte, wobei die Tinte in einer Dicke aufgetragen wird, die für die Busse größer ist als für die Mikrokreise, derart, dass die Busse einen beim Fließen des Stroms minimierten elektrischen Widerstand entgegensetzen.

2. Polsterung nach Anspruch 1, **dadurch gekennzeichnet, dass** sie umfasst:
• einen einzigen ersten Bus (7), der im mittleren Teil der Polsterung gelegen ist, sodass der Bus einen mittleren Bus (7) bildet,
• zwei zweite Busse (8a, 8b), die seitlich und symmetrisch beiderseits des mittleren Busses angeordnet sind, sodass die zweiten Busse seitliche Busse (8a, 8b) bilden, wobei jeder der seitlichen Busse mit einer zweiten Verbindungsstelle (10a, 10b) versehen ist.

3. Polsterung nach Anspruch 2, **dadurch gekennzeichnet, dass** sich die Busse (7, 8a, 8b) allgemein in Vorderansicht in Form von Bändern mit konstanter Breite darstellen, wobei die Breite (18) des mittleren Busses (7) im Wesentlichen dem Doppelten jener (19) der seitlichen Busse (8a, 8b) entspricht.

4. Polsterung nach Anspruch 3, **dadurch gekennzeichnet, dass** die Breite (18) des mittleren Busses (7) zwischen 1,8 und 2,2 Mal der Breite (19) der seitlichen Busse (8a, 8b) entspricht.

5. Polsterung nach einem der Ansprüche 2 bis 4, **dadurch gekennzeichnet, dass** die Mikrokreise (12) in Bereichen platziert sind, die in Bezug auf den mittleren Bus (7) symmetrisch angeordnet sind.

6. Polsterung nach einem der Ansprüche 2 bis 5, **dadurch gekennzeichnet, dass**:
• der mittlere Bus (7) mit mindestens einem ersten und einem zweiten Paar an querlaufenden Verzweigungen (13a, 13b, 14a, 14b) versehen ist, die sich entlang der Länge des Busses abstufen, wobei zwei Verzweigungen eines gegebenen Paares jeweils zu dem einen und dem anderen der seitlichen Busse (8a, 8b) gerichtet sind,
• die seitlichen Busse jeweils mit querlaufenden wechselseitigen Verzweigungen (15a, 15b) versehen sind, die zu dem mittleren Bus gerichtet sind, wobei jede der wechselseitigen Verzweigungen durch eine Vielzahl von Mikrokreisen (12) an eine jeweilige Verzweigung (13a, 13b, 14a, 14b) des mittleren Busses angeschlossen ist, wobei die Vielzahl einen Heizteilkreis (16) bildet.

7. Polsterung nach Anspruch 6, **dadurch gekennzeichnet, dass** die Verzweigungen (13a, 13b, 14a, 14b) und wechselseitigen Verzweigungen (15a, 15b) eine Breite aufweisen, die geringer wird, je weiter man auf ihr freies Ende hin zugeht.

8. Polsterung nach einem der Ansprüche 1 bis 7, **dadurch gekennzeichnet, dass** die Breite der Mikrokreise (12) eines Heizteilkreises (16) zunimmt, je weiter sich der Teilkreis von den Verbindungsstellen (9, 10a, 10b) entfernt.

9. Polsterung nach einem der Ansprüche 1 bis 8, **dadurch gekennzeichnet, dass** die Unterlage (6), die den gedruckten Stromkreis (5) empfängt, wahlweise gebildet ist aus:
• einer biegsamen Schicht (17), die zwischen dem Block (2) und der Deckschicht (3) eingeschoben ist,
• oder der Seite des Blocks, die dazu bestimmt ist, einen Insassen des Sitzes zu empfangen,
• oder der Rückseite der Deckschicht.

10. Kraftfahrzeugsitz, umfassend eine Polsterung nach einem der Ansprüche 1 bis 9, wobei die Polsterung mit einer Armatur des Sitzes fest verbunden angebracht ist, wobei die Verbindungsstellen (9, 10a, 10b) am Rand (11) der Polsterung gelegen sind, wobei der Rand in der Verbindungszone zwischen der Sitzfläche und der Rückenlehne angeordnet ist.

## Claims

1. Cushioning (1) for a seating or backrest portion of a motor vehicle seat, said cushioning comprising:
- an elastically compressible material-based padded block (2),
- a cap (3) for covering said block,
- a heating layer (4) being inserted between said block and said cap, said layer comprising an electric circuit 5 made from conductive ink, said ink being based on a polymer binder wherein are dispersed conductive particles, said ink being printed on a support (6),
said cushioning having the following features:
- said circuit comprises at least one first (7) and at least one second (8a, 8b) bus extending longitudinally,
- said first bus is provided with a first connection point (9) intended to be connected to a first pole of an electrical generator and said second bus is provided with a second connection point (10a, 10b) intended to be connected to a second pole of said generator, said connection points being located along an edge (11) of said cushioning,
- said buses are connected together by a plurality of printed microcircuits (12) shaped so as to form resistances capable of heating said cushioning by flow of an electrical current,
said cushioning being **characterised in that** it furthermore has, as required, either one of the following features:
- said buses are made from a first ink and said microcircuits are made from a second ink, said first ink having a higher intrinsic conductivity than that of the second ink,
- or indeed said buses and microcircuits are made from one same ink, said ink being deposited more thickly for said buses than for said microcircuits, such that said buses provide minimised electrical resistance to the flow of current.

2. Cushioning according to claim 1, **characterised in that** it comprises:
- a first single bus (7) located in the central portion of said cushioning, such that said bus forms a central bus (7),
- two second buses (8a, 8b) arranged laterally and symmetrically on either side of said central bus, such that said second buses form lateral buses (8a, 8b), each of said lateral buses being provided with a second connection point (10a, 10b).

3. Cushioning according to claim 2, **characterised in that** the buses (7, 8a, 8b) are presented generally in the front view in the form of strips with a constant width, the width (18) of the central bus (7) being substantially the double of the one (19) of the lateral buses (8a, 8b).

4. Cushioning according to claim 3, **characterised in that** the width (18) of the central bus (7) is between 1.8 and 2.2 times the width (19) of the lateral buses (8a, 8b).

5. Cushioning according to any one of claims 2 to 4, **characterised in that** the microcircuits (12) are placed on tracks arranged symmetrically with respect to the central bus (7).

6. Cushioning according to any one of claims 2 to 5, **characterised in that**:
- the central bus (7) is provided with at least one first and one second pair of transversal branches (13a, 13b, 14a, 14b) sloping along the length of said bus, two branches of a given pair pointing respectively towards either of the lateral buses (8a, 8b),
- said lateral buses are each provided with transversal reciprocal branches (15a, 15b) pointing towards said central bus, each of said reciprocal branches being connected to a respective branch (13a, 13b, 14a, 14b) of said central bus by a plurality of microcircuits (12), said plurality forming a heating sub-circuit (16).

7. Cushioning according to claim 6, **characterised in that** the branches (13a, 13b, 14a, 14b) and reciprocal branches (15a, 15b) have a width reducing as it is directed towards the free end thereof.

8. Cushioning according to any one of claims 1 to 7, **characterised in that** the width of the microcircuits (12) of a heating sub-circuit (16) increases as said sub-circuit is moved away from the connection points (9, 10a, 10b).

9. Cushioning according to any one of claims 1 to 8, **characterised in that** the support (6) receiving the printed electrical circuit (5) is formed, as required, by:
- a flexible layer (17) inserted between the cap (3) and the block (2),
- or the face of said block intended to receive an occupant of the seat,
- or the underside of said cap.

10. Motor vehicle seat comprising a cushioning according to any one of claims 1 to 9, said cushioning being mounted secured to a frame of said seat, the connection points (9, 10a, 10b) being located at the edge (11) of said cushioning, said edge being arranged in the junction zone between the seating and the backrest.
